# EUROPÄISCHE PATENTSCHRIFT

(11) **EP 0 656 177 B1**
(45) Veröffentlichungstag und Bekanntmachung des Hinweises auf die Patenterteilung: **17.05.2000**
(21) Anmeldenummer: 94118393.1
(22) Anmeldetag: 23.11.1994
(51) Int. Cl.: A23L 1/217, A23L 1/212

(54) **Kontakttrocknung von Lebensmittelprodukten**
Contact drying of food products
Séchage par contact de produits alimentaires

(30) Priorität: 01.12.1993 CH 359993
(43) Veröffentlichungstag der Anmeldung: 07.06.1995
(73) Patentinhaber: SCHWEIZERISCHE EIDGENOSSENSCHAFT EIDGENÖSSISCHE TECHNISCHE HOCHSCHULE (ETH), 8092 Zürich (CH)
(72) Erfinder: Ufheil, Gerhard, Dipl.-Ing., 8092 Zürich (CH); Escher, Felix Ernst, Prof. Dr., 8092 Zürich (CH)
(74) Vertreter: Blum, Rudolf Emil Ernst

(56) Entgegenhaltungen:
- WO-A-92/21250
- FR-A- 2 380 742
- GB-A- 2 254 994
- US-A- 4 721 625
- DATABASE WPI Week 8830, Derwent Publications Ltd., London, GB; AN 88-209789 & JP-A-63 146 760 (SANGO KK) 18. Juni 1988
- DATABASE WPI Week 9030, Derwent Publications Ltd., London, GB; AN 90-228477 & JP-A-2 156 874 (YOSHIOKA K) 15. Juni 1990
- DATABASE WPI Week 9227, Derwent Publications Ltd., London, GB; AN 92-223948 & JP-A-4 152 836 (ITO S) 26. Mai 1992

## Beschreibung

Die vorliegende Erfindung betrifft ein Trocknungsverfahren für Nahrungsmittel. Insbesondere stellt das Verfahren einen Ersatz für das bekannte Fritieren dar. Ferner betrifft die Erfindung ein fettfreies oder fettarmes Nahrungsmittel.

Beim üblichen Fritieren insbesondere dünner Produkte, wie Kartoffelscheiben, wird in sehr kurzer Zeit ein hoher Trocknungsgrad erreicht. Beim Fritieren erfährt das Fritiergut eine strukturelle Veränderung, die es luftig, knusprig und nicht allzu hart erscheinen lässt. Gleichzeitig werden beim Fritieren aromatische Geschmacks- und Geruchsstoffe gebildet.

Nachteil des Fritierens ist aber die hohe Fettaufnahme durch das Fritiergut.

Es wurden bereits verschiedene Versuche unternommen, fettarme oder gar fettfreie Produkte mit ähnlichen Eigenschaften, wie sie von fritierten Nahrungsmitteln her bekannt sind, herzustellen. Solche Verfahren sind beispielsweise Infrarottrocknung resp. Trocknung mit Mikrowelle. Diese bekannten Verfahren zur Herstellung fettarmer bis fettfreier Produkte weisen jedoch verschiedene Nachteile auf, u.a. die andersartige Ausbildung des Aromas und der Textur.

In GB-A-2,254,994 werden fettfreie Kartoffelchips, welche eine knusprige Textur aufweisen, fritierten Kartoffelchips sehr ähnlich sind und für ihre Fettranzigkeit nicht anfällig sind, offenbart. Diese Chips werden dadurch erzeugt, dass Kartoffelchips getrocknet und bei 140°C bis 220°C ohne Fettzugabe getoastet werden.

WO-A-92-21250 beschreibt fettfreie bzw. fettarme Kartoffelchips, welche den Geschmack und die Textur von in Öl fritierten Kartoffelchips haben sowie ein Verfahren zu deren Herstellung. In diesem Verfahren durchlaufen die zu trocknenden Kartoffelscheiben ein Mikrowellenfeld und werden anschliessend einem Trocknungsvorgang unterworfen.

In FR-A-2,380,742 wird ein Kartoffelprodukt aus einem Kartoffelteig mit einem Trockengehalt zwischen 8 und 40 Gew.-% offenbart, wobei dieser Teig zwischen 2 auf 120-160°C erwärmten Zylindern getrocknet wird. Das Erzeugnis hat einen natürlichen Kartoffelgeschmack.

Nach keinem der drei oben genannten Verfahren wird ersichtlich, dass es sich dabei um ein Verfahren handelt, in welchem keine unerwünschten Oxidationsprodukte im Trocknungsprodukt selbst vorhanden sind. Im Verfahren von GB-A-2,254,994 wird eine Fettranzigkeit - welche das Ergebnis von Oxidationsvorgängen im Öl, nicht aber im Trocknungsprodukt ist - verhindert.

Ziel der vorliegenden Erfindung war es deshalb, ein Verfahren zur Herstellung eines Produktes mit kontrolliertem und reduziertem Fettgehalt bereitzustellen, das jedoch die Vorteile eines fritierten Produktes aufweist, sowie ein nach diesem Verfahren herstellbares fettreduziertes oder fettfreies Produkt.

Dieses Ziel wurde erreicht durch das Bereitstellen des erfindungsgemässen Kontakttrocknungsverfahrens.

Bei diesem Kontakttrocknungsverfahren geht die Wärmeübertragung nicht über ein flüssiges Medium, wie beim Fritieren, sondern über den Direktkontakt des zu trocknenden Gutes mit zwei heissen Platten derart, dass der Wärmeübergang und die Trocknungskinetik mit dem Fritierprozess vergleichbar oder identisch sind. Dadurch wird die oft beobachtete Schrumpfung vermindert oder gar verhindert.

Produkte, die einer solchen Trocknung unterzogen werden können, sollten einen Trockensubstanzanteil von mindestens ca. 10 Gew.-%, vorzugsweise ca. 10 bis ca. 40 Gew.-%, aufweisen. Geeignet sind insbesondere stärkehaltige Produkte, beispielsweise Kartoffeln aber auch Gemüse. Die zu trocknenden Produkte sollten in Scheiben schneidbar oder scheibenförmig verarbeitbar sein.

Speziell geeignet ist dieses Kontakttrocknungsverfahren für Produkte, die bei anderen Trocknungsverfahren schrumpfen und sich dabei an der Oberfläche verhärten oder verhornen.

Die Schnittdicken der zu trocknenden Produkte liegen üblicherweise im Bereich von 0,8 bis 5 mm, insbesondere im Bereich von 1-3 mm. Diese Schnittdicken sind insbesondere bei schrumpfenden Produkten günstig.

Die Verfahrensparameter, insbesondere Temperatur, Trocknungszeit und Plattenabstand, beeinflussen sich gegenseitig und sind von der Schnittdicke sowie vom zu trocknenden Material abhängig.

Für die Trocknung sind bei Normaldruck mind. 100°C erforderlich, üblicherweise werden jedoch Temperaturen im Bereich von 120-200°C, vorzugsweise im Bereich von 150-180°C angewendet. Die Trocknungszeit, die von der Schnittdicke, der zu erzielenden Endfeuchte sowie der verwendeten Temperatur abhängig ist, liegt üblicherweise in einem Bereich von 1-10 Minuten und vorzugsweise im Bereich von 1-4 Minuten.

Der Abstand der Platten während des Trocknungsprozesses kann entweder konstant gehalten oder variiert werden. Ueblicherweise entspricht der Plattenabstand zu Beginn des Trocknungsprozesses der Schnittdicke. In speziellen Fällen kann der Plattenabstand bereits zu Beginn des Trocknungsprozesses 0,5 mm mehr als die Schnitdicke betragen. Bei üblichen Trocknungsprozessen, beispielsweise von Kartoffelscheiben, kann der Plattenabstand gezielt um bis zu maximal 20 % der ursprünglichen Scheibendicke vermindert werden, d.h. von einem Plattenabstand, der der Anfangsschnittdicke entspricht bis auf einen Abstand entsprechend der Anfangsschnittdicke - 20%.

Durch diese Verminderung des Plattenabstands wird der Kontakt zwischen Platte und Scheibe aufrecht erhalten und auftretende geringe Schnittdickenvariationen innerhalb einer resp. zwischen mehreren Scheiben ausgeglichen. Der angewendete Druck ist für das Endresultat nicht essentiell. Meist wird der Druck konstruktionsbedingt sein, beispielsweise dem Gewicht der verwendeten Platten entsprechen.

Bei der Wahl des Materials, das in direktem Kontakt sowohl mit den Platten als auch mit dem zu trocknenden Produkt steht, ist insbesondere auf einen guten Wärmeübergang zu achten. Geeignet sind deshalb Materialien mit hohen Wärmeleitfähigkeiten resp. in solchen Schichtdicken, dass der notwendige Wärmeübergang in jedem Falle gewährleistet ist, beispielsweise Aluminium. Für eine optimale Wärmeübertragung werden glatte Oberflächen bevorzugt, wobei sich glatte Aluminiumoberflächen beispielsweise für die Trocknung von Kartoffelscheiben als sehr günstig erwiesen haben, da gleichzeitig mit einer guten Wärmeübertragung eine gute Ablösbarkeit des getrockneten Produkts von der Plattenoberfläche erzielt wird. Ein Hauptproblem bei allen Trocknungsverfahren ist die Dampfabfuhr. Diese muss auch bei diesem Kontaktverfahren gewährleistet sein. Die Dampfabfuhr wird generell besser, je kleiner das zu trocknende Produkt ist. Bei gegebener Produktgrösse kann sie durch die Plattenart resp. durch die Plattenform und/oder deren Strukturierung verbessert werden. Bessere Ableitung des während der Trocknung entstehenden Wasserdampfs wird beispielsweise mit Sintermaterialien, insbesondere Sintermetallen erzielt. Anstelle von Sinterwerkstoffen können auch strukturierte Oberflächen verwendet werden, um die Ableitung des Wasserdampfs zu fördern, wobei die Strukturierung derart ist, dass sie nicht auf das Produkt übertragen wird, d.h. sie soll nicht die Oberfläche des Produkts vergrössern, sondern die Dampfentfernung verbessern.

Ueberraschenderweise wurde festgestellt, dass als Kontaktmaterial auch hochtemperaturbeständige Gewebe, insbesondere Kunststoffgewebe, beispielsweise Teflon, verwendet werden können. Bei solchen Geweben ist darauf zu achten, dass diese so dünn sind, dass die Wärmeübertragung gegenüber Metall um max. ca. 40 % vermindert wird. Durch das Kunststoffgewebe wird eine gute Ableitung des Wasserdampfs gewährleistet und zugleich ein Festkleben des getrockneten Produkts an der Plattenoberfläche verhindert. Soll primär ein Festkleben des Produkts an der Plattenoberfläche verhindert werden, so kann diese auch mit einem hochtemperaturbeständigen Kunststoff, z.B. Teflon, beschichtet werden. Die im Trockenprodukt vorhandene Restfeuchtigkeit beträgt gewöhnlich von 0,5 bis 8 Gew.-% vorzugsweise ca. 2,5 Gew.-%.

Das Kontaktverfahren erlaubt die gezielte Fettapplikation auf die zu trocknenden Produkte. Es kann ohne oder mit definierter Fettzugabe durchgeführt werden. Fettzugabe kann beispielsweise als Trennmittel und/oder als zusätzliche Aromakomponente wünschenswert sein. Für grössere Fettmengen eignet sich die Applikation über befettete Gewebe, für geringe Fettmengen sind fettimprägnierte Platten vorteilhafter.

Die Fettapplikation kann auch dadurch erreicht werden, dass das zu trocknende Produkt vorfritiert und anschliessend der Kontakttrocknung unterzogen wird, so dass bei der Kontakttrocknung das Fett durch den austretenden Wasserdampf mindestens teilweise wieder entfernt wird.

Wichtig ist aber, dass der Fettgehalt generell steuerbar ist. Ueblicherweise beträgt dieser bei direkter Kontakttrocknung 0 resp. 2 bis 20 Gew.-%, in Kombination mit Vorfritieren kann dieser Gehalt höher liegen, meist bei ca. 10 bis 25 Gew.-%.

Es ist selbstverständlich, dass mit diesem Verfahren nicht nur ebene Produkte, sondern auch beliebig strukturierte Produkte hergestellt werden können, je nach Ausbildung der Platten.

Es hat sich ferner gezeigt, dass bei diesem Verfahren unerwünschte Oxidationsprozesse - gleich wie beim Fritieren - ausbleiben. Beispielsweise kann bei Kartoffelprodukten das Entstehen eines ranzigen Kartoffelaromas durch die Oxidation kartoffeleigener Lipide während der Trocknung verhindert werden.

Das erfindungsgemässe Verfahren eignet sich sehr gut für die Herstellung fettreduzierter oder fettfreier Snack-Produkte.

Zur Durchführung des erfindungsgemässen Verfahrens eignen sich sämtliche Apparaturen, die einen sehr hohem Wärmeübergang auf das zu trocknende Gut bei rascher Trocknungskinetik, sowie die Abführung des entstehenden Wasserdampfes gewährleisten. Neben stationären Platten ist beispielsweise ein Zweibandtrockner geeignet, dessen Bänder gegebenenfalls mit Platten versehen sind, die jeweils paarweise angeordnet sind.

Zusammenfassend weist das erfindungsgemässe Kontaktverfahren die folgenden Besonderheiten auf:
1. Hohe Trocknungsgeschwindigkeit, die mit dem Fritieren vergleichbar ist,
2. hohe Wärmeübergangskoeffizienten, die ebenfalls mit dem Fritieren vergleichbar sind,
3. hohe Temperaturen, die ebenfalls mit dem Fritieren vergleichbar sind,
4. Trocknung bis zu sehr niederen Feuchtigkeiten, insbesondere schnelle Trocknung,
5. gezielter zweiseitiger Kontakt mit Festkörpern anstelle von Flüssigkeiten, wodurch die Aufbereitung gebrauchter Flüssigkeit entfällt,
6. poröse Struktur, knusprige Textur vergleichbar mit fritierten Produkten,
7. Aromaentwicklung durch hohe Temperaturen,
8. kein Nebengeschmack durch Bildung unerwünschter Oxidationsprodukte während der Trocknung.

In der Folge wird das Verfahren anhand von drei Beispielen zur Herstellung von Kartoffelchips näher erläutert.

### Beispiel 1

Kartoffeln mit einem hohen Stärkegehalt von ca. 19 % werden in Scheiben von 2 auf 6 cm Grösse mit einer Schnittdicke von 1,5 mm geschnitten. Diese Scheiben werden zwischen zwei glatte Aluminiumplatten mit einer Temperatur von 170°C gegeben. Der Plattenabstand wird während einer Trocknungszeit von 2 Minuten auf 1,3 mm reduziert.

Das so erhaltene Produkt kommt organoleptisch den bekannten fetthaltigen Kartoffelchips sehr nahe.

### Beispiel 2

Kartoffeln mit hohem Stärkegehalt von ca. 19% werden in Scheiben von 4 auf 6 cm Grösse mit einer Schnittdicke von 1,1 mm geschnitten. Diese Scheiben werden bei einem Blattabstand von 1,3 mm zwischen Aluminiumplatten gegeben, die zusätzlich mit je einem Teflongewebe einer Dicke von ca. 0,1 mm versehen sind. Beide Platten haben eine Temperatur von 170°C. Während der Trocknungszeit von 2 Minuten wird der Plattenabstand (bezogen auf die Platten ohne Gewebe) von 1,3 auf 1,1 mm reduziert.

Auch dieses Produkt kommt organoleptisch den bekannten fetthaltigen Kartoffelchips des Standes der Technik sehr nahe.

### Beispiel 3

Kartoffeln mit hohem Stärkegehalt von ca. 19% werden zu Scheiben von 4 auf 6 cm Grösse mit einer Schnittdicke von 1,5 mm geschnitten. Diese Scheiben werden während 20 Sek. bei 170°C in Erdnussöl fritiert und anschliessend bei fixem Abstand zweier Aluminiumplatten von 1,5 mm während 2 Minuten bei 170°C einer Kontakttrocknung unterzogen.

Das derart erhaltene Produkt hat einen Fettgehalt von ca. 20 % und ist kaum von einem fritierten Produkt des Stands der Technik unterscheidbar.

Ein weiterer Gegenstand der vorliegenden Erfindung ist ein fettreduziertes oder fettfreies Trockenprodukt, das nach dem hier beschriebenen Verfahren herstellbar ist und eine poröse Struktur und eine knuspriche Textur aufweist, die mit fritierten Produkten vergleichbar ist.

Bevorzugte Ausführungsarten sind in den abhängigen Ansprüchen definiert.

## Patentansprüche

1. Verfahren zur Herstellung fettarmer bis fettfreier Trockenprodukte, dadurch gekennzeichnet, dass das zu trocknende Produkt zwischen die auf mind. 100°C aufgeheizten Kontaktflächen zweier wärmeleitfähiger Platten gegeben wird.

2. Verfahren gemäss Anspruch 1, dadurch gekennzeichnet, dass das zu trocknende Produkt einen Trockensubstanzgehalt von ca. 10 bis ca. 40 Gew.-% aufweist.

3. Verfahren gemäss Anspruch 1 oder 2, dadurch gekennzeichnet, dass mindestens eine Kontaktfläche glatt ist und aus Metall besteht.

4. Verfahren gemäss einem der Ansprüche 1 bis 3, dadurch gekennzeichnet, dass mindestens eine der wärmeleitfähigen Platten aus Sintermetall besteht oder strukturiert ist.

5. Verfahren gemäss einem der Ansprüche 1 bis 4, dadurch gekennzeichnet, dass mindestens eine der Kontaktflächen ein Gewebe aus einem hitzebeständigen Material, insbesondere Kunststoff, beispielsweise Teflon, ist.

6. Verfahren gemäss einem der Ansprüche 1 bis 5, dadurch gekennzeichnet, dass die Kontaktflächen eine Temperatur von 120 bis 200°C, insbesonders 150 bis 180°C aufweisen.

7. Verfahren gemäss einem der Ansprüche 1 bis 6, dadurch gekennzeichnet, dass auf die Kontaktflächen vor dem Trocknungsschritt eine definierte Fettmenge aufgebracht wird.

8. Verfahren gemäss einem der Ansprüche 1 bis 7, dadurch gekennzeichnet, dass die Kontakttrocknung an einem teilweise vorfritierten Produkt durchgeführt wird.

9. Verfahren gemäss einem der Ansprüche 1 bis 8, dadurch gekennzeichnet, dass das zu trocknende Produkt Gemüse, insbesonders Kartoffeln, ist.

10. Fettarmes oder fettfreies Trockenprodukt, erhältlich nach dem Verfahren gemäss einem der Ansprüche 1 bis 9.

11. Trockenprodukt gemäss Anspruch 10, dadurch gekennzeichnet, dass es ein Gemüse-, insbesonders ein Kartoffelprodukt ist.

## Claims

1. Method for the production of low fat to non-fat drying-products, characterised in that the product to be dried is placed between the contact surfaces of two heat conducting plates heated to at least about 100°C.

2. The method of claim 1, characterised in that the product to be dried has a dry matter content between 10 and 40 % by weight.

3. The method of claim 1 or 2, characterised in that at least one of the contact surfaces is smooth and consists of metal.

4. The method of one of claims 1 to 3, characterised in that at least one of the heat transferring plates consists of or is structured of sintered metal.

5. The method of one of claims 1 to 4, characterised in that at least one of the contact surfaces is of heat-resisting tissue, in particular of plastics, for example of Teflon.

6. The method of one of claims 1 to 5, characterised in that the contact surfaces have a temperature of 120 to 200°C, in particular of 150 to 180°C.

7. The method of one of claims 1 to 6, characterised in that, prior to the drying step, a defined amount of fat has been applied to the contact surfaces.

8. The method of one of claims 1 to 7, characterised in that the contact drying is performed with a partially pre-fried product.

9. The method of one of claims 1 to 8, characterised in that the product to be dried is a vegetable, in particular a potato.

10. Low fat or non-fat dried product obtainable by the method of one of claims 1 to 9.

11. Dried product according to claim 10, characterised in that it is a vegetable product, in particular a potato product.

## Revendications

1. Procédé de préparation de produits séchés pauvres en graisse jusqu'à exempts de graisse, caractérisé en ce que le produit à sécher est mis entre les surfaces de contact de deux plaques conductrices de chaleur chauffées à au moins 100°C.

2. Procédé suivant la revendication 1, caractérisé en ce que le produit à sécher présente une teneur en substance sèche d'environ 10 à environ 40% en poids.

3. Procédé suivant la revendication 1 ou 2, caractérisé en ce qu'au moins une surface de contact est lisse et est constituée de métal.

4. Procédé suivant l'une des revendications 1 à 3, caractérisé en ce qu'au moins une des plaques conductrices de chaleur est constituée de métal fritté ou est structurée.

5. Procédé suivant l'une des revendications 1 à 4, caractérisé en ce qu'au moins une des surfaces de contact est un tissu en un matériau résistant à la chaleur, en particulier une matière synthétique, par exemple du Téflon.

6. Procédé suivant l'une des revendications 1 à 5, caractérisé en ce que les surfaces de contact présentent une température de 120 à 200°C, en particulier de 150 à 180°C.

7. Procédé suivant l'une des revendications 1 à 6, caractérisé en ce qu'une quantité définie de graisse est appliquée sur les surfaces de contact avant l'étape de séchage.

8. Procédé suivant l'une des revendications 1 à 7, caractérisé en ce que le séchage par contact est réalisé sur un produit partiellement frit au préalable.

9. Procédé suivant l'une des revendications 1 à 8, caractérisé en ce que le produit à sécher est un légume, en particulier des pommes de terre.

10. Produit séché pauvre en graisse ou exempt de graisse, pouvant être obtenu suivant le procédé selon l'une des revendications 1 à 9.

11. Produit séché suivant la revendication 10, caractérisé en ce qu'il s'agit d'un produit de légume, en particulier un produit de pomme de terre.
